# EUROPÄISCHE PATENTSCHRIFT

(11) **EP 4 277 831 B1**
(45) Veröffentlichungstag und Bekanntmachung des Hinweises auf die Patenterteilung: **11.03.2026**
(21) Anmeldenummer: 21820162.2
(22) Anmeldetag: 24.11.2021
(51) Int. Cl.: B62D 17/00, B60G 7/02

(54) **JUSTIERUNGSEINHEIT UND VERSTELLUNGSEINRICHTUNG ZUR EINSTELLUNG EINER RELATIVEN POSITION VON GEGENEINANDER GELAGERTEN BAUTEILEN**
ADJUSTMENT UNIT AND ADJUSTMENT DEVICE FOR ADJUSTING THE RELATIVE POSITION OF COMPONENTS SUPPORTED AGAINST ONE ANOTHER
UNITÉ DE RÉGLAGE ET DISPOSITIF DE RÉGLAGE POUR RÉGLER LA POSITION RELATIVE DE COMPOSANTS SUPPORTÉS L'UN CONTRE L'AUTRE

(30) Priorität: 13.01.2021 DE 102021100455
(43) Veröffentlichungstag der Anmeldung: 22.11.2023
(73) Patentinhaber: Audi AG, 85045 Ingolstadt (DE)
(72) Erfinder: REISNER, Maximilian, 86529 Schrobenhausen (DE)
(86) Internationale Anmeldenummer: PCT/EP2021/082824
(87) Internationale Veröffentlichungsnummer: WO 2022/152441

(56) Entgegenhaltungen:
- DE-A1- 3 329 350
- JP-A- H02 227 310
- KR-B1- 102 029 844
- US-A- 5 398 411
- US-A1- 2011 095 499

## Beschreibung

Die Erfindung betrifft eine Justierungseinheit gemäß der im Oberbegriff des Patentanspruches 1 angegebenen Art sowie eine Verstellungseinrichtung zur Justierung einer relativen Position von gegeneinander gelagerten Bauteilen gemäß Patentanspruch 7.

Das Fahrwerk eines Fahrzeugs ist ein komplexer Verbund von Bauteilen, die eine Verbindung des Fahrzeugaufbaus über die Räder zur Fahrbahn herstellen. Üblicherweise ist ein Rad eines Fahrzeugs über mehrere Lenker derart mit dem Fahrzeugaufbau verbunden, dass eine relative Bewegung zwischen dem Fahrzeugaufbau und dem Rad ermöglicht ist. Die Lenker sind dabei zumeist radseitig über jeweils ein Lager angebunden. Fahrzeugaufbauseitig können die Lenker über ein Lager mit der Karosserie, einem mit der Karosserie verbundenen Bauteil oder einem Lenkgetriebe verbunden sein. Speziell dienen die Lenker als eine Verbindung, über die eine korrekte Radausrichtung bezogen auf die Fahrzeugkarosserie herstellbar ist, um eine sicheres und komfortables Fahrverhalten von Fahrzeugen zu gewährleisten. Durch eine Verstellung insbesondere der fahrzeugaufbauseitigen Lagerposition in Querrichtung des Fahrzeugs kann beispielsweise eine Einstellung der Spur oder des Sturzes über dem Federweg erfolgen.

Verstellungsvorrichtungen zur Spur- oder Sturzeinstellung für Fahrwerke oder Radaufhängungen von Kraftfahrzeugen sind bekannt. Zum Stand der Technik wird auf die DE 41 15 110 C2, DE 44 37 661 A1, US 5 398 411 A und EP 2 783 947 A1 verwiesen, aus denen Verstellungseinrichtungen bekannt sind, bei denen ein Lager eines Lenkers in einer zweischnittigen Lagerhalterung bzw. zwischen zwei Tragschenkeln unter Verwendung eines Lagerbolzens und einer Mutter befestigt ist, wobei der Lagerbolzen in einem Langloch des jeweiligen Tragschenkels gelagert ist. An den Tragschenkeln befinden sich beidseitig der Langlöcher Führungen, zwischen denen ein Distanzelement, insbesondere eine Exzenterscheibe, angeordnet ist. Zur Einstellung des Lenkers kann der Lagerbolzen, nach Lockern einer Mutter oder dergleichen, durch Verdrehen innerhalb der Langlöcher verschoben bzw. verstellt werden, wodurch eine Verschiebung des Lagers in Fahrzeugquerrichtung bewirkt ist, um beispielsweise eine Relativbewegung zwischen einem Lenker und einem Abschnitt der Karosserie oder eines Radträgers zu bewirken.

Dokument US 5 398 411 A offenbart eine Justierungseinheit gemäß dem Oberbegriff des Anspruchs 1.

Die EP 1 932 692 A1 offenbart eine Gelenkvorrichtung zur Anbindung eines Lenkers an einen Fahrzeugaufbau, die ein Gummi-Metall-Lager umfasst, das von einem Lagerbolzen durchsetzt ist, dessen Längsachse die Gelenkachse definiert. Der Lenker ist über zwei jeweils ein Langloch aufweisende Montageabschnitte, die einteilig mit dem Lagerbolzen ausgebildet sind, mit dem Fahrzeugaufbau verschraubt. Die Montageabschnitte erstrecken sich in einer Ebene, die in einem vorbestimmten Winkel zur Gelenkachse geneigt ist. Ein als Nockenelement ausgebildetes Distanzelement ist an einem der Langlöcher angeordnet. Über eine Drehung des Distanzelements ist die relative Position des Lenkers zum Fahrzeugaufbau einstellbar.

Die DE 10 2015 016 493 A1 offenbart eine Lageranordnung für eine Radaufhängung eines Fahrzeugs, bei der ein Lenker mittels eines Gummi-Metall-Lagers um eine Schwenkachse an einem Fahrzeugaufbau, z.B. einem Hilfsrahmen, angelenkt ist. Das Gummi-Metall-Lager ist in einer als ein separates Bauteil ausgebildeten Lenkerkonsole montiert, die mittels eines Anbindungsflansches über Schraubverbindungen einer Stelleinheit mit dem Fahrzeugaufbau verbunden ist. Die Schrauben durchsetzen hilfsrahmenseitige Langlöcher, deren Längserstreckung eine Verstellrichtung der Schwenkachse definiert, insbesondere zur Einstellung des Sturzverhaltens der Radaufhängung gegenüber der aufbauseitigen Tragstruktur.

Die DE 102014 201 876 A1 betrifft eine Verstellungseinrichtung zur Spur- und/oder Sturz-Einstellung eines Radführungselementes, das über jeweils ein Lager einerseits mit dem Fahrzeugaufbau und andererseits mit einem Radträger eines Rades des Kraftfahrzeugs verbunden ist. Eines der jeweiligen Lager weist ein als Exzenter ausgebildetes Verstellelement auf, welches eine mittels eines Stellantriebs verstellbare Exzenterwelle aufweist. Durch die Rotation der Exzenterwelle ist eine radindividuelle Verstellung realisierbar.

In der DE 10 2014 226 536 A1 ist ein Lenker für eine Radaufhängung eines Fahrzeugs beschrieben, der zweiteilig ausgebildet ist. Die beiden Lenkerelemente des Lenkers sind über Befestigungselemente sowie über eine Längeneinstellungsvorrichtung miteinander verbunden. Die Längeneinstellungsvorrichtung ist als eine Exzenterschraube ausgebildet, welche durch ein Langloch des jeweils einen Lenkerelements hindurchgeführt ist. Ein am Langloch angeordnetes Distanzelement, beispielsweise eine Exzenterscheibe, ist in einer Führung geführt. Beim Drehen der Exzenterschraube bewirkt die Zwangsführung eine Verschiebung des Schraubenschaftes, die in bzw. entgegen der Lenkerlängsachse einhergeht und die Relativposition von den beiden Lenkerelementen ändert. Somit ist die Länge des Lenkers veränderbar und dient zur Einstellung der Spur und/oder des Sturzes.

Die WO 2016 041 706 A1 offenbart eine Spur- oder Lenkstange für ein Fahrzeug, die ein Rohr aufweist, das über eine Justierhülse mit einem Gelenk verbunden ist. Die Justierhülse ist in einer ersten Drehrichtung in das Ende des Rohres eingeschraubt, und über ein zu der ersten Drehrichtung entgegengesetzt gängiges Innengewinde mit einem Schaft des Gelenks verschraubt. Durch Drehen der Justierhülse relativ zu dem Rohr und zu dem Schaft ist eine axiale Verstellbewegung des Rohrs relativ zu dem Gelenk ermöglicht. Die Justierhülse weist einen in axialer Richtung verlaufenden mäander- oder sinusförmigen Schlitz auf. Eine Klemmschelle drückt den Rohrendbereich unter Zwischenschaltung der Justierhülse gegen den Außenumfang des Schafts. Dadurch sind das Rohr, die Justierhülse und der Schaft relativ zueinander in ihrer Lage fixiert.

In der DE 10 2015 101 438 A1 ist eine Verstellungseinrichtung beschrieben. Eine über ein Distanzelement einstellbare Distanzbaugruppe, umfasst ein Gelenk, das ein von zwei Lagerlaschen umgriffenes Buchsenlager aufweist. Das Buchsenlager ist mit einer konzentrisch zur Lagerachse angeordneten Durchgangsbohrung ausgebildet. In der Durchgangsbohrung ist ein als Nocken ausgebildetes Distanzelement aufgenommen, das eine durchgängige Nockenbohrung aufweist, dessen Nockenachse exzentrisch zur Lagerachse verläuft. Eine in der Nockenbohrung angeordnete Schraube durchdringt die Lagerlaschen und steht mit der Nockenbohrung derart in Eingriff, dass eine Drehung der Schraube um die erste Nockenachse bewirkt, dass der Nocken in der Buchse um die Lagerachse rotiert. Auf diese Weise bewegen sich die Lagerlaschen relativ zur Lagerachse, wodurch sich der Abstand zwischen den Bauteilen der Bauteilgruppe einstellen lässt.

Die DE 33 29 350 A1 offenbart eine Vorrichtung zur Sturzeinstellung einer McPherson-Radaufhängung, bei der der Achsschenkel über zwei Schraubverbindungen zwischen Befestigungsflanschen gehalten wird. Eine dieser Schraubverbindungen ist als Einstellvorrichtung ausgebildet. Die Einstellung des Radsturzes erfolgt über eine Mutter, die formschlüssig in einer schräg durch den Achsschenkel verlaufenden Bohrung geführt ist. Der Verstellmechanismus basiert somit auf der speziellen Geometrie des Achsschenkels und dem Zusammenwirken von Mutter, Bolzen und Bohrung.

Der Nachteil an Verstellungseinrichtungen ist, dass sie meist bauteilintensive und teure Konstruktionen sind, die oft in aufwendigen Schweißkonstruktionen integriert sind, wodurch sie geringe Flexibilität aufweisen. Ferner sind sie meist in nur schwer zugänglichen Bereichen mit geringem Bauraum verbaut, in dem viele verschiedene Bauteile untergebracht sind, wodurch eine Montage erschwert ist.

Der Erfindung liegt die Aufgabe zugrunde eine Justierungseinheit der im Oberbegriff des Patentanspruches 1 angegebenen Art derart weiterzubilden, dass die Nachteile der vorbekannten Lösungen verringert werden.

Diese Aufgabe wird durch die kennzeichnenden Merkmale des Patentanspruches 1 in Verbindung mit seinen Oberbegriffsmerkmalen sowie durch Patentanspruch 7 gelöst.

Ferner betrifft die Erfindung eine Verstellungseinrichtung zur Justierung eines Abstandes von gegeneinander gelagerten Bauteilen gemäß Patentanspruch 7.

Die Unteransprüche bilden vorteilhafte Weiterbildungen der Erfindung.

In bekannter Art und Weise und erfindungsgemäß umfasst eine Justierungseinheit ein Gummi-Metall-Lager, das einen Innenkern ausweist, der sich entlang der Lagerachse des Gummi-Metall-Lagers erstreckt. Der Innenkern weist eine sich in Längsrichtung des Innenkerns erstreckende Durchführung auf, die zur Aufnahme eines Lagerbolzens dient, der beispielsweise als eine Schraube mit einem Teilgewinde ausgebildet sein kann.

Erfindungsgemäß ist in der Durchführung ein verstellbares Distanzelement angeordnet. Das Distanzelement kann beispielsweise als ein Nockenelement ausgebildet sein. Das Distanzelement weist einen Durchbruch auf, der ebenfalls zur Aufnahme des Lagerbolzens konzipiert ist. Im eingebauten Zustand des Gummi-Metall-Lagers durchsetzt der Lagerbolzen den Innenkern sowie das Distanzelement. Das Distanzelement erstreckt sich entlang einer Längsachse, die eine Anbindungsachse des Gummi-Metall-Lagers definiert und die sich parallel zur Lagerachse erstreckt.

Über eine Verstellung des Distanzelements sind die Anbindungsachse und die Lagerachse relativ zueinander verstellbar. So bewirkt beispielsweise eine Rotation des Lagerbolzens um die jeweilige Längsachse, dass die Anbindungsachse relativ zur Lagerachse verstellt ist bzw. die Anbindungsachse um die Lagerachse rotiert. Das bewirkt eine Verstellung der Lagerposition. Auf diese Weise ist beispielsweise ein Gummi-Metall-Lager, das zur Verbindung eines Lenkers mit einem Hilfsrahmen dient, insbesondere in Querrichtung des Fahrzeugs verstellbar, um somit die Spur und/oder den Sturz einzustellen.

Dabei ist das Distanzelement in Erstreckungsrichtung der Durchführung beweglich angeordnet, wobei im eingebauten Zustand des Lagers eine axiale Verstellung des Distanzelements linear entlang der Anbindungsachse erfolgt und eine Auslenkung des Innenkerns quer zur Anbindungsachse bewirkt. Der Innenkern des Gummi-Metall-Lagers erstreckt sich koaxial zur Lagerachse, die im Wesentlichen in einer Ebene parallel zur Anbindungsachse angeordnet ist. Das Distanzelement ist innerhalb der Durchführung des Innenkerns entlang der Längsachse der Durchführung linear beweglich. Zugleich erfolgt die lineare Bewegung des Distanzelements im eingebauten Zustand der Justierungseinheit entlang der Anbindungsachse. Durch die lineare Bewegung des Distanzelements erfolgt eine translatorische Auslenkung des Innenkerns quer zur Anbindungsachse. Mit anderen Worten ist über die lineare Bewegung des Distanzelements eine translatorische Verschiebung der Lagerachse und somit des gesamten Gummi-Metall-Lagers innerhalb der Ebene bewirkt. Durch die translatorische Verschiebung des Innenkerns ist das gesamte Gummi-Metall-Lager über einen sich quer zur Anbindungsachse erstreckenden Verstellweg verschiebbar.

Die Justierungseinheit ist beispielsweise als Lager zur Verbindung von Bauteilen einsetzbar. Konsequenterweise ist eine Relativposition dieser Bauteile über die Justierungseinheit variierbar. So ist die Justierungseinheit beispielsweise zum Ausgleich von produktionsbedingten Toleranzen von gegeneinander gelagerten Bauteilen oder zur Einstellung von Radstellungsgrößen verwendbar.

Die Justierungseinheit weist in vorteilhafter Weise einen geringen Bauraumbedarf auf, der dem Bauraumbedarf eines herkömmlichen Lagers entspricht.

Ferner ist die Justierungseinheit nachträglich in Gelenke integrierbar. Ein herkömmliches, in ein Gelenk eingepresstes Gummi-Metall-Lager ist beispielsweise durch die Justierungseinheit ersetzbar. Die Justierungseinheit ist z.B. als Mehrausstattung oder als Fahrwerk-Tuningkit vermarktbar.

Gemäß einer bevorzugten Ausführungsform ist das Distanzelement verdrehfest im Innenkern angeordnet. Das Distanzelement ist in der Durchführung des Innenkerns angeordnet und kann eine geringere Längserstreckung als die Durchführung aufweisen. Die Durchführung und das Distanzelement können eine im Wesentlichen komplementäre Form zueinander aufweisen, die eine Verdrehung des Distanzelements gegenüber dem Innenkern verhindert. So weisen die Durchführung und das Distanzelement beispielweise jeweils eine Sechskantform auf, wobei die Durchführung und das Distanzelement passgenau aufeinander abgestimmt sind. Dabei kann das Distanzelement beispielsweise als eine Normteil-Sechskantmutter ausgebildet sein und der Innenkern kann über ein Extrusionsverfahren mit einem sechskantförmigen Durchbruch ausgebildet sein. In vorteilhafter Weise ist die Justierungseinheit kostengünstig und mit geringem Aufwand herstellbar.

Es ist auch denkbar, dass der Durchbruch als eine im Wesentlichen rechteckige Aussparung ausgebildet ist und das Distanzelement beispielsweise eine Würfelform aufweist, wobei das Distanzelement zwei parallele Würfelkanten aufweist, die passgenau im Durchbruch angeordnet sind, um eine Verdrehung des Distanzelements gegenüber dem Durchbruch zu verhindern. Ferner ist das Distanzelement platzsparend und geschützt von Staub und Dreck im Innenkern des Gummi-Metall-Lagers integriert.

Gemäß einer bevorzugten Ausführungsform weist die Durchführung des Innenkerns eine Längsachse auf, die in einem Winkel zur Lagerachse verläuft. Die Durchführung des Innenkerns ist geometrisch derart gestaltet, dass sie eine Steigung gegenüber der Lagerachse aufweist. D.h. die jeweiligen Achsen der Durchführung und des Gummi-Metall-Lagers sind in einem Winkel zueinander angeordnet, der beispielsweise 5° bis 30° aufweisen kann. Der Winkel kann insbesondere 8° betragen.

Der Innenkern des Gummi-Metall-Lagers kann beispielsweise die oben erwähnte sechskantförmige Durchführung aufweisen, die derart ausgebildet ist, dass ihre Längsachse in einem Winkel zur Lagerachse verläuft. Das Distanzelement, das eine geringere Längserstreckung aufweisen kann als die Durchführung, ist innerhalb der Durchführung in Längsrichtung linear verschiebbar. Im eingebauten Zustand erfolgt eine lineare Verstellung des Distanzelements entlang der Anbindungsachse, die durch den Durchbruch des Distanzelements definiert ist. Die Zwangsführung des Distanzelements einerseits entlang der Anbindungsachse und andererseits innerhalb der Durchführung, die sich in einem Winkel zur Lagerachse und zur Anbindungsachse erstreckt, hat den Effekt, dass eine Verschiebung des Distanzelements den Innenkern des Gummi-Metall-Lagers translatorisch auslenkt, wobei die Wirkrichtung quer zur Anbindungsachse verläuft. Mit anderen Worten ist durch die lineare Verstellung des Distanzelements eine translatorische Auslenkung des Innenkerns und somit des gesamten Lagers gegenüber der Anbindungsachse bewirkt.

Gemäß einer alternativen Ausführungsform ist das Distanzelement entlang wenigstens einer am Innenkern angeordneten Führungsschiene verschiebbar, wobei sich die Führungsschiene in einem Winkel zur Lagerachse in Längsrichtung der Durchführung erstreckt. Bei dieser Ausführungsform kann die Durchführung insbesondere als eine rechtwinkelige, sich in axialer Richtung des Gummi-Metall-Lagers erstreckende Aussparung ausgebildet sein. Die Durchführung kann koaxial zur Lagerachse angeordnet sein. In der Durchführung ist beispielsweise ein würfelförmiges Distanzelement verdrehsicher gegenüber dem Innenkern angeordnet. Am Innenkern ist eine Führungsschiene angeordnet, die zur Führung des Distanzelementes beispielsweise als eine Nut oder dergleichen ausgebildet ist. Die Führungsschiene kann beispielsweise eine Profilierung aufweisen.

Die Führungsschiene erstreckt sich in Längsrichtung der Durchführung in einem Winkel zur Lagerachse. Der Winkel kann beispielsweise 8° aufweisen. Das Distanzelement ist entlang der Führungsschiene in Längsrichtung der Durchführung verstellbar, wobei eine Verschiebung des Distanzelements entlang der Führungsschiene bei gleichzeitiger Zwangsführung entlang der Anbindungsachse eine translatorische Auslenkung des Innenkerns des Gummi-Metall-Lagers quer zur Anbindungsachse bewirkt. Auf diese Weise ist das gesamte Gummi-Metall-Lager quer zur Anbindungsachse verschoben.

Insgesamt ist die Wirkrichtung der translatorischen Auslenkung des Innenkerns und somit des Gummi-Metall-Lagers quer zur Anbindungsachse. In vorteilhafter Weise ist die Wirkrichtung flexibel einstellbar durch eine Veränderung der Orientierung der Justierungseinheit bzw. der Ausrichtung des Gummi-Metall-Lagers der Justierungseinheit.

Die Geometrie des Innenkerns ist flexibel auf die Anforderungen der Justierungseinheit bzw. auf die Anforderungen einer Gelenkverbindung anpassbar. So ist die Justierungseinheit über eine Veränderung des Innenkerns, d.h. durch die entsprechende Auswahl der Geometrie des Innenkerns, besonders flexibel einsetzbar.

Bevorzugt weist das Distanzelement wenigstens ein Führungselement auf, das in der Führungsschiene aufgenommen ist. Das Führungselement kann beispielsweise als ein Führungsstift oder dergleichen ausgebildet sein. Die Führungsschiene und das Führungselement können beispielsweise mit komplementären Profilen ausgebildet sein. Das Führungselement führt das linear verstellbare Distanzelement sicher entlang der Führungsschiene, wobei das Distanzelement wie ein aufmontierter Laufwagen entlang der Führungsschiene verschiebbar ist. Dabei verschiebt das Führungselement den Lagerinnenkern translatorisch entlang der Wirkrichtung, d.h. quer zur Anbindungsachse.

Vorzugsweise ist das Distanzelement mit einem Innengewinde ausgebildet. Das Innengewinde steht insbesondere mit einem Außengewinde des Lagerbolzens in Eingriff, wobei die lineare Verstellung des Distanzelements entlang der Anbindungsachse durch Aufschrauben des Distanzelements auf den Lagerbolzen bewirkt ist. Das Distanzelement ist mit einem Innengewinde ausgebildet, das insbesondere die gleiche Dimension aufweist wie ein Außengewinde des aufzunehmenden Lagerbolzens. Das Innengewinde kann mit dem Außengewinde derart in Eingriff steht, dass ein Aufschrauben des Distanzelementes auf den Lagerbolzen eine lineare Wegstrecke des Distanzelements entlang der Anbindungsachse bzw. Längsachse des Lagerbolzens bewirkt. Das Distanzelement ist zugleich entlang des Lagerbolzens bzw. entlang der Anbindungsachse und in der Durchführung, die in einem Winkel zur Anbindungsachse verläuft, zwangsgeführt, wodurch in der Folge das Distanzelement den Innenkern verschiebt. Dadurch ist eine translatorische Auslenkung des Innenkerns bzw. der Lagerachse gegenüber der Anbindungsachse bewirkt.

Ferner betrifft die Erfindung eine Verstellungseinrichtung zur Einstellung einer relativen Position von zwei gegeneinander gelagerten Bauteilen, wobei eines der gegeneinander gelagerten Bauteile eine Lageraufnahme und das andere eine Lagerhalterung aufweist. Die Lageraufnahme ist in an sich bekannter Weise von der am jeweils anderen Bauteil angeordneten Lagerhalterung umgriffen, die als eine zweischnittige Anbindung beispielsweise mit gabelartigen Tragschenkel, Aufnahmeschenkeln, Lagerlaschen oder dergleichen ausgebildet ist. Die Verstelleinheit umfasst eine Justierungseinheit, einen Lagerbolzen und eine auf den Lagerbolzen aufschraubbare Mutter.

Erfindungsgemäß weist die Verstellungseinrichtung eine Justierungseinheit auf, wie sie oben beschrieben ist. Die Justierungseinheit ist mit einem Gummi-Metall-Lager ausgebildet. Das Gummi-Metall-Lager ist unter Verwendung des Lagerbolzens und der Mutter in der Lagerhalterung fixiert. Der Lagerbolzen, der beispielsweise als eine Schraube mit einem Teilgewinde ausgebildet sein kann, durchsetzt das Gummi-Metall-Lager, das Distanzelement sowie die Lagerhalterung und ist mittels der aufschraubbaren Mutter an der Lagerhalterung festlegbar. Im eingebauten Zustand der Verstellungseinrichtung ist über die lineare Verstellung des Distanzelements entlang der Anbindungsachse eine translatorische Auslenkung des Innenkerns quer zur Anbindungsachse bewirkt, wodurch in der Folge eine relative Position der gegeneinander gelagerten Bauteile justierbar ist.

Die Verstellungseinrichtung ermöglicht in vorteilhafter Weise eine Relativposition zwischen gegeneinander gelagerten Bauteilen über große Verstellwege einzustellen, wobei der Bauraumbedarf der Verstellungseinrichtung in vorteilhafter Weise gegenüber einer herkömmlichen zweischnittigen Lageranbindung gleich bleibt. Die Verstellungseinrichtung beansprucht gegenüber aus dem Stand der Technik bekannten Verstellungseinrichtung einen geringen Bauraum und ist in vorteilhafter Weise in bauraumkritischen, schwer zugänglichen Bereichen einfach montierbar.

Die Verstellungseinrichtung ist an einer beliebigen Lagerstelle einsetzbar, die eine zweischnittige Gelenk- oder Lageranbindung aufweist. So kann sie beispielsweise zur Anbindung eines Antriebsaggregates am Hilfsrahmen dienen.

Insbesondere ist die Verstellungseinrichtung im Fahrwerk an Kinematikpunkten einsetzbar, die eine zweischnittige Gelenk- oder Lageranbindung aufweisen. So kann beispielsweise ein Lenker mit einem Hilfsrahmen über die Verstellungseinrichtung verbunden sein, wobei über die Verstellungseinrichtung die Radstellungsgrößen, beispielsweise der Spur- und/oder Sturzwinkel, beeinflussbar und justierbar sind.

Durch die unterschiedlich einstellbare Orientierung bzw. Ausrichtung des Lagers ist die Verstellungseinrichtung in vorteilhafter Weise richtungsunabhängig. So ist sie beispielsweise geeignet, um unterschiedliche Fahrzeugniveauhöhen bei identischen Radstellungsgrößen und zudem gleichen Änderungsgradienten der Radstellungsgrößen über dem Federweg zu verwirklichen.

Über die Verstellungseinrichtung sind auch produktionsbedingte Toleranzen der zu verbindenden Bauteile auf einfache Weise ausgleichbar.

Ferner bringt die Verstellungseinrichtung in der automatisierten Fahrzeugproduktion Vorteile. So ist beispielsweise bei einer automatisierten Achsjustierung eine translatorische Auslenkung eines Verschraubungsautomaten hinfällig, wodurch die Montagezeit verringert ist.

Durch die Verstellungseinrichtung sowie die Justierungseinheit ist eine hohe Flexibilität in der Entwicklung beispielsweise eines Fahrzeugs oder dergleichen ermöglicht. So ist bei konstruktiven Änderungen, beispielsweise der zu verbindenden Bauteilen, die Wirkrichtung des Verstellwegs der Verstellungseinrichtung einfach durch die Änderung der Lagerausrichtung veränderbar. Ferner muss lediglich der Innenkern des Lagers der Justierungseinheit verändert werden, ohne eine Veränderung eines gesamten Bauteils, beispielsweise einer gesamten Hilfsrahmenkonstruktion.

Vorzugsweise steht der Lagerbolzen über das Distanzelement mit dem Innenkern in Wirkverbindung, um den Innenkern über einen Verstellweg quer zur Anbindungsachse auszulenken. Ein Außengewinde des Lagerbolzens steht in Eingriff mit einem Innengewinde des Distanzelements. Ein Drehen des Lagerbolzens führt dazu, dass das Distanzelement sich über eine lineare Wegstrecke am Lagerbolzen verschiebt. Eine Drehbewegung des Lagerbolzens bewirkt eine lineare Bewegung des Distanzelements entlang des Lagerbolzens. Das Distanzelement ist in der Durchführung des Innenkerns geführt, wobei die Durchführung eine Steigung bzw. einen Winkel gegenüber der Anbindungsachse und dem Lagerbolzen aufweist. Durch das Zusammenspiel der Zwangsführung des Distanzelements sowohl in der Führungsschiene als auch entlang des Lagerbolzens bewirkt die lineare Bewegung des Distanzelements eine translatorische Bewegung des Innenkerns, wobei die Wirkrichtung sich quer zum Lagerbolzen erstreckt. Das bedeutet, dass die Lagerachse über einen Verstellweg quer zur Anbindungsachse auslenkbar ist, mit der Konsequenz, dass eine Justierung einer relativen Position der gegeneinander gelagerten Bauteile über die Verstellungseinrichtung ermöglicht ist. Dabei weist die Verstellungseinrichtung den Vorteil auf, dass eine Einstellung der relativen Position der gegeneinander gelagerten Bauteile allein durch das Verdrehen des Lagerbolzens erreicht ist. In vorteilhafter Weise ist auf weitere, aufwendige und teilweise teure Konstruktionen verzichtet, z.B. Schweißkonstruktionen an den Lagerhalterungen oder Hilfsrahmenkonstruktionen. Dadurch sind die Montage- und Fertigungskosten verringert.

Bevorzugt ist der Verstellweg in Abhängigkeit einer axialen Wegstrecke des Distanzelements verstellbar. Durch die Geometrie der Führungsschiene weist der Verstellweg des Innenkerns gegenüber der Anbindungsachse ein direktes Verhältnis zur relativen Position des Distanzelementes entlang der Anbindungsachse. Alternativ ist der Verstellweg in Abhängigkeit einer Anzahl von Drehungen des Lagerbolzens verstellbar. Je nach Anzahl der Drehungen des Lagerbolzens ist das Distanzelement um einen präzisen Verstellweg gegenüber der Anbindungsachse verschiebbar. Auf diese Weise ist eine Annäherung des Verstellwegs an einen Endanschlag erkennbar.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: eine erfindungsgemäße Justierungseinheit,
- Fig. 2: eine erfindungsgemäße Justierungseinheit in einer Lageraufnahme eines Lenkers angeordnet;
- Fig. 3: ein Lenker an dem eine erfindungsgemäße Verstellungseinrichtung angeordnet ist;
- Fig. 4: ein Hilfsrahmen und ein Lenker, die über eine erfindungsgemäße Verstellungseinrichtung gegeneinander gelagert sind;
- Fig. 5: eine Schnittdarstellung einer erfindungsgemäßen Verstellungseinrichtung mit einem Distanzelement in Mittenstellung;
- Fig. 6: eine Schnittdarstellung einer erfindungsgemäßen Verstellungseinrichtung mit einem ausgelenkten Distanzelement; und
- Fig. 7: eine Schnittdarstellung einer erfindungsgemäßen Verstellungseinrichtung mit einem ausgelenkten Distanzelement;

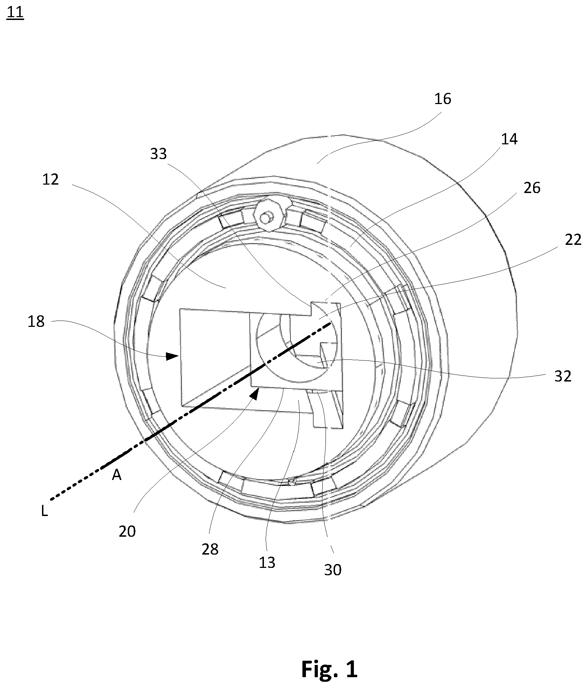

In Fig. 1 ist eine insgesamt mit der Bezugsziffer 10 bezeichnete erfindungsgemäße Justierungseinheit dargestellt.

Die Justierungseinheit 10 weist ein Gummi-Metall-Lager 11 auf. Das Lager 11 weist einen Innenkern 12 auf, der vorliegend über einen Elastomerkörper 14 mit einer Außenhülse 16 verbunden ist. Der Innenkern 12 des Lagers 11 ist vorliegend im Wesentlichen zylinderförmig ausgebildet und erstreckt sich in Richtung Lagerachse L. Der Innenkern 12 weist eine Durchführung 18 auf, die vorliegend als eine im Wesentlichen rechteckige, durchgängige Aussparung 18 ausgebildet ist, die sich in axialer Richtung des Lagers 11 erstreckt.

In der Durchführung 18 ist ein Distanzelement 20 angeordnet, das einen Durchbruch 22 zur Aufnahme eines vorliegend nicht dargestellten Lagerbolzens 24 aufweist. Der Durchbruch 22 ist mit einem vorliegend ebenfalls nicht dargestellten Innengewinde ausgebildet. Der Durchbruch 22 definiert eine Anbindungsachse A des Lagers 11, die parallel zur Lagerachse L verläuft. Vorliegend überlagern sich die Anbindungsachse A und die Lagerachse L. Das Distanzelement 20 ist vorliegend würfelförmig ausgebildet und ist über zwei parallel zueinander verlaufende Kanten 26, 28 passgenau in der Durchführung 18 des Innenkerns 12 angeordnet, um ein Verdrehen des Distanzelementes 20 gegenüber dem Innenkern 12 zu verhindern.

Das Distanzelement 20 ist in Erstreckungsrichtung des Lagers 11 innerhalb der Durchführung 18 linear verstellbar bzw. verfahrbar. Das Distanzelement 20 ist vorliegend über ein Führungselement 30, das beispielsweise als ein Führungsstift 30 ausgebildet ist, in einer Führungsschiene 32 geführt. Die Führungsschiene 32 ist an einer Innenwand 13 des Innenkerns 12 angeordnet, und kann insbesondere als Nut, Einkerbung oder Rille der Innenwand 13 ausgebildet sein. Es ist auch möglich, dass die Führungsschiene 32 beispielsweise als ein schienenartiges, separates Bauteil 32 ausgebildet ist. Die Führungsschiene 32 erstreckt sich in einem Winkel zur Lagerachse L in Längsrichtung der Durchführung 18. D.h. die Führungsschiene 32 weist eine Steigung gegenüber der Lagerachse L auf.

Vorliegend weist der Innenkern 12 gegenüberliegend zur Führungsschiene 32 eine weitere Führungsschiene 33 auf. Die beiden Führungsschienen 32, 33 sind im Wesentlichen gleich ausgebildet und verlaufen parallel zueinander.

Das Distanzelement 20 ist innerhalb der Durchführung 18 entlang der Längsachse der Durchführung 18 linear verstellbar. Im eingebauten Zustand der Justierungseinheit 10 erfolgt die lineare Bewegung des Distanzelements 20 zwangsmäßig entlang der Anbindungsachse A, wodurch eine translatorische Auslenkung des Innenkerns 12 und somit des gesamten Lagers 11 quer zur Anbindungsachse A bewirkt ist.

Es ist auch denkbar, dass die Durchführung 18 beispielsweise eine Sechskantform aufweist und in Längsrichtung des Lagers 11 in einem Winkel zur Lagerachse L verläuft, wobei die Lagerachse L und die Längsachse der Durchführung 18 im Wesentlichen in der gleichen Ebene verlaufen. In dieser alternativen Ausführungsform weist das Distanzelement 20 eine komplementär zur Durchführung 18 ausgebildete Sechskantform auf. Das Distanzelement 20 ist in der Durchführung 18 linear beweglich, wobei die Längsachse der Durchführung 18 eine Steigung bzw. einen Winkel gegenüber der Lagerachse L aufweist. Durch die Zwangsführung des Distanzelements 20 entlang der Anbindungsachse A verschiebt das Distanzelement den Innenkern 12 des Lagers 11 translatorisch, wobei die Wirkrichtung der Verschiebung quer zur Anbindungsachse A verläuft.

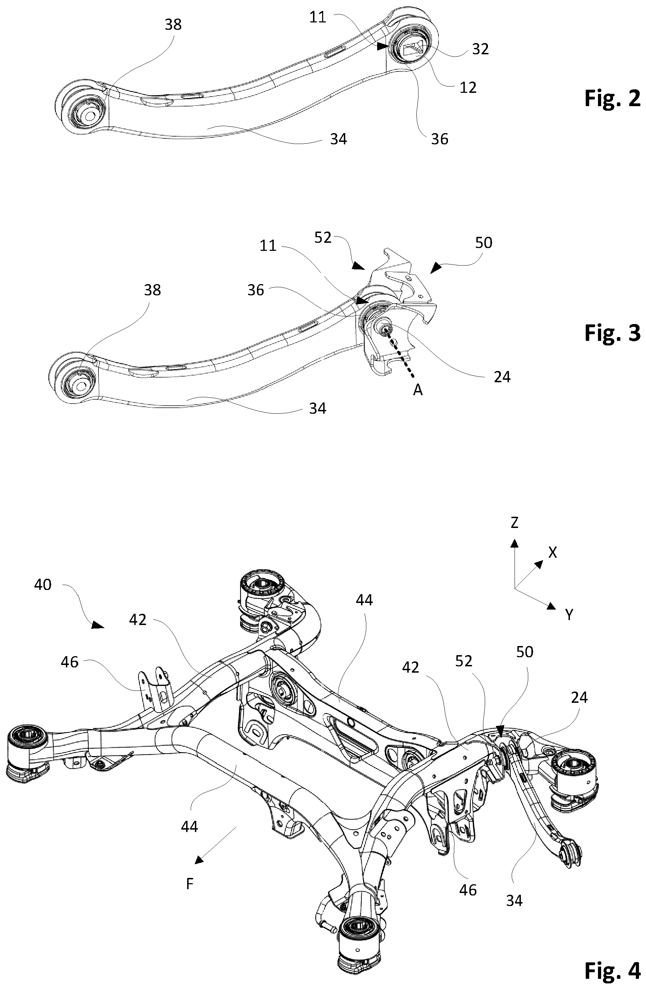

Fig. 2 stellt einen Querlenker 34 eines Fahrzeuges dar, der an seinen Enden jeweils mit einer ersten Lageraufnahme 36 und einer zweiten Lageraufnahme 38 ausgebildet ist. Vorliegend ist in der ersten Lageraufnahme 36 eine wie in Fig. 1 dargestellte Justierungseinheit 10 angeordnet, über die der Querlenker 34 beispielsweise mit einem vorliegend nicht dargestellten Hilfsrahmen 40 verbindbar ist. Die Justierungseinheit 10 weist vorliegend eine Führungsschiene 32 auf, die derart ausgerichtet ist, dass die Wirkrichtung der Verschiebung des Innenkerns 12 entlang der Lenkerlängsachse verläuft. Im eingebauten Zustand des Lenkers 34 ermöglicht eine um 90° gedrehte Anordnung des Lagers beispielsweise die Justierung von Radstellungsgradienten, wie. z.B. die Spur- und/oder Sturzwinkeländerung über einem Federweg.

In Fig. 3 ist ein Querlenker 34 nach Fig. 1 dargestellt, wobei am Querlenker 34 eine erfindungsgemäße Verstellungseinrichtung angeordnet ist, die insgesamt mit der Bezugsziffer 50 bezeichnet ist. Die Verstellungseinrichtung 50 umfasst eine Justierungseinheit 10, die vorliegend in der ersten Lageraufnahme 36 des Querlenkers 34 aufgenommen ist und über einen Lagerbolzen 24 an einer zweischnittigen Lagerhalterung 52 fixiert ist. Die Justierungseinheit 10 verbirgt sich platzsparend hinter der Lagerhalterung 52 und weist in vorteilhafter Weise den gleichen Bauraumbedarf auf wie ein herkömmliches Gummi-Metall-Lager 11, über das ein Lenker 42 mit einem Hilfsrahmen 40 verbindbar ist.

In Fig. 4 ist eine Anbindung des Querlenkers 34 an einen Hilfsrahmen 40 gezeigt, die über die Verstellungseinrichtung 50 erfolgt. Der Hilfsrahmen 40 weist vorliegend zwei sich in Fahrzeuglängsrichtung X erstreckende Längsträger 42 auf, die über zwei sich in Fahrzeugquerrichtung Y erstreckende Querträger 44 miteinander verbunden sind. Die Fahrtrichtung ist mit F angegeben. Am Hilfsrahmens 40 sind seitlich mehrere Lagerhalterungen 46, 52 zur Anbindung von Radführungselementen angeordnet, von denen lediglich ein Querlenker 34 dargestellt ist.

Die erfindungsgemäße Verstellungseinrichtung 50 ist in einem Anbindungsbereich des Hilfsrahmens 40 angeordnet, der aufgrund beengter Bauraumverhältnisse nur schwer einsehbar und/oder zugänglich ist. Das Lager 11 der Verstellungseinrichtung 50 ist an der zweischnittigen Lagerhalterung 52 des Hilfsrahmens 40 über eine Schraubenverbindung mittels eines Lagerbolzens 24 befestigt. Durch Drehen des Lagebolzens 24 ist eine einfache Verstellung des Abstandes zwischen dem Hilfsrahmen 40 und dem Querlenker 34 in Fahrzeugquerrichtung Y ermöglicht, um beispielsweise eine Änderung von Radstellungsgrößen wie die Spur und/oder den Sturz vorzunehmen.

Die Verstellungseinrichtung 50 ist nicht auf den Einsatz in Radaufhängungen limitiert. Sie kann beispielsweise auch zur Lagerung eines Aggregates am Hilfsrahmen 40 eingesetzt werden.

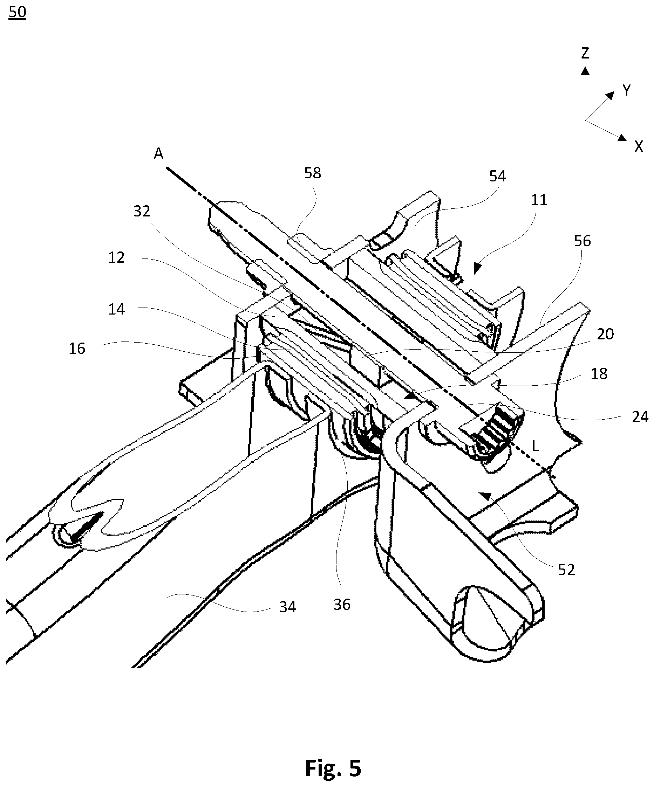

Fig. 5 stellt einen Querschnitt der Verstellungseinrichtung 50 nach Fig. 3 entlang der Anbindungsachse A von schräg oben dar. Die Verstellungseinrichtung 50 umfasst eine Justierungseinheit 10, die ein Lager 11 aufweist, das in einer Lageraufnahme 36 des Querlenkers 34 aufgenommen ist. Die Lageraufnahme 36 ist von einer zweischnittigen Lagerhalterung 52 umgriffen, die zwei Lagerlaschen 54, 56 aufweist. Das Lager 11 und die Lagerlaschen 54, 56 sind von einem Lagerbolzen 24 durchsetzt, der beispielsweise mit einem Teilgewinde ausgebildet ist und der unter Verwendung einer Mutter 58 in der Lagerhalterung 52 fixiert ist. Der Lagerbolzen 24 liegt an einer Anbindungsachse A des Lagers 11 an.

Der Innenkern 12 des Lagers 11 ist vorliegend mit einer im Wesentlichen rechteckigen Durchführung 18 ausgebildet. In der Durchführung 18 ist eine insbesondere als Nut ausgebildete Führungsschiene 32 am Innenkern 12 angeordnet. Die Führungsschiene 32 erstreckt sich in Längsrichtung der Durchführung 18, wobei die Führungsschiene 32 sich in einem Winkel zur Lagerachse L und somit zur Anbindungsachse A erstreckt. D.h. die Führungsschiene 32 weist eine Steigung gegenüber der Lagerachse L sowie der Anbindungsachse A auf.

In der Führungsschiene 32 ist ein vorliegend würfelförmiges Distanzelement 20 mittels wenigstens eines Führungselementes 30 geführt. Am Distanzelement 20 ist beispielsweise ein als Führungsstift 30 ausgebildetes Führungselement 30 angeordnet, das in der Führungsschiene 32 geführt ist.

Das Distanzelement 20 weist einen Durchbruch 22 auf, in dem der Lagerbolzen 24 aufgenommen ist. Vorliegend ist das Distanzelement 20 in axialer Längsrichtung des Lagers 11 in einer Mittenstellung dargestellt. Vorliegend überlagern sich die Lagerachse L und die Anbindungsachse A. Der Durchbruch 22 ist mit einem vorliegend nicht dargestellten Innengewinde ausgebildet, das mit einem Außengewinde des Lagerbolzens 24 in Eingriff steht. Der Lagerbolzen 24 ist in das Innengewinde geschraubt, wobei eine Drehung des Lagerbolzens 24 bewirkt, dass das Distanzelement 20 sich axial entlang des Lagerbolzens 24 bewegt. Die Mutter 58 des Lagerbolzens 24 ist hierbei noch nicht festgezogen. Durch die Zwangsführung des Distanzelementes 20 entlang des Lagerbolzens 24 verschiebt das Führungselement 30 den Innenkern 12 über einen Verstellweg quer zur Anbindungsachse. D.h. der Innenkern 12 und somit das gesamte Lager 11 sind quer zum Lagerbolzen 24 verschiebbar. Sobald der gewünschte Verstellweg des Lager 11 und somit des Querlenkers relativ zum hier nicht dargestellten Hilfsrahmen erreicht ist, wird die Mutter 58 des Lagerbolzens 24 festgezogen. Somit läuft der Kraftfluss wieder über die Stirnseiten des Innenkerns 12.

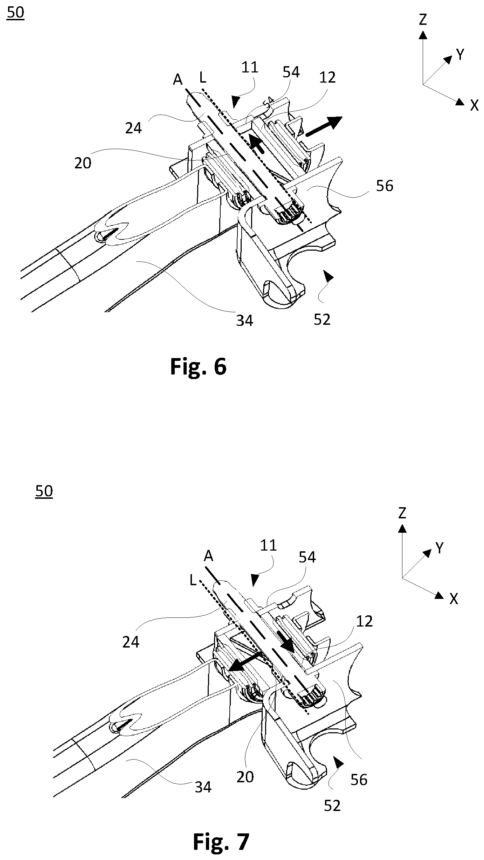

Fig. 6 und Fig. 7 zeigen jeweils die Verstellungseinrichtung 50 nach Fig. 5, wobei das Distanzelement 20 in unterschiedlich ausgelenkten Positionen entlang des Lagerbolzens 24 angeordnet ist. Der vorliegend gezeigte Verstellungseinrichtung 50 ist insbesondere zur Sturz- oder Spurkorrektur vorgesehen. Wird der Lagerbolzen 24 gedreht, so ergibt sich durch die Zwangsführung des Distanzelementes 20 entlang des Lagerbolzens 24 und einem Zusammenspiel des vorliegend nicht dargestellten Führungselementes 30 mit der Führungsschiene 32, eine Verschiebung des Innenkerns 12 des Lagers 11 quer zum Lagerbolzen 24 bzw. zur Anbindungsachse A. Durch die Verschiebung des Innenkerns 12 ändert sich die Relativposition des Innenkerns 12 sowie des gesamten Lagers 11 zur Anbindungsachse A, die am Lagerbolzen 24 anliegt. Dadurch ändert sich die Position des Lenkers 42 relativ zu den Lagerlaschen 54, 56 der Lagerhalterung 52, die beispielsweise an einem Hilfsrahmen 40 angeordnet ist.

Durch die geometrische Gestaltung der Führungsschiene 32 kann die Verschiebung des Lenkers 34 als Funktion der Position der Distanzelements 20 entlang des Lagerbolzens 24, sukzessive der Anzahl der Umdrehungen des Lagerbolzens 24 eingestellt sein, sodass eine Annäherung des Lenkers 24 an einen jeweiligen Endanschlag einfach zu erkennen ist.

Auf die beschriebene Weise ist ein Abstand zwischen dem Querlenker 34 und dem vorliegend nicht dargestellten Hilfsrahmen 40 durch Drehen des Lagerbolzens 24 justierbar. So ist in der Fig. 6 ein Abstand zwischen dem Lenker und dem vorliegend nicht dargestellten Hilfsrahmen 40 durch Auslenkung des Distanzelements 20 in eine Richtung verkleinert, wohingegen in Fig. 7 der Abstand des Lenkers 34 zum Hilfsrahmen 40 durch Auslenkung des Distanzelements 20 in die jeweils andere Richtung vergrößert ist.

## Patentansprüche

1. Justierungseinheit (10), umfassend ein Gummi-Metall-Lager (11) mit einer Lagerachse (L), wobei das Gummi-Metall-Lager (11) einen Innenkern (12) aufweist, der sich entlang der Lagerachse (L) erstreckt, wobei der Innenkern (12) mit einer sich in Längsrichtung des Innenkerns (12) erstreckenden Durchführung (18) ausgebildet ist,
**dadurch gekennzeichnet, dass**
in der Durchführung (18) ein Distanzelement (20) angeordnet ist, das einen Durchbruch (22) zur Aufnahme eines Lagerbolzens (24) aufweist, wobei der Durchbruch (22) sich entlang einer Längsachse erstreckt, welche eine Anbindungsachse (A) des Gummi-Metall-Lagers (11) definiert, und wobei die Anbindungsachse (A) und die Lagerachse (L) über eine Verstellung des Distanzelements (20) relativ zueinander verstellbar sind, wobei das Distanzelement (20) in Erstreckungsrichtung der Durchführung (18) beweglich angeordnet ist, wobei im eingebauten Zustand des Gummi-Metall-Lagers (11) eine axiale Verstellung des Distanzelements (20) entlang der Anbindungsachse (A) erfolgt und eine translatorische Auslenkung des Innenkerns (12) quer zur Anbindungsachse (A) bewirkt.

2. Justierungseinheit nach Anspruch 1,
**dadurch gekennzeichnet, dass**
das Distanzelement (20) verdrehfest im Innenkern (12) angeordnet ist.

3. Justierungseinheit nach einem der Ansprüche 1 oder 2,
**dadurch gekennzeichnet, dass**
die Durchführung (18) des Innenkerns (12) eine Längsachse aufweist, die sich in einem Winkel zur Lagerachse (L) erstreckt.

4. Justierungseinheit nach einem der Ansprüche 1 oder 2,
**dadurch gekennzeichnet, dass**
das Distanzelement (20) entlang wenigstens einer am Innenkern (12) angeordneten Führungsschiene (32, 33) verschiebbar ist, wobei sich die Führungsschiene (32, 33) in einem Winkel zur Lagerachse (L) in Längsrichtung der Durchführung (18) erstreckt.

5. Justierungseinheit nach Anspruch 4,
**dadurch gekennzeichnet, dass**
das Distanzelement (20) wenigstens ein Führungselement (30) aufweist, welches in der Führungsschiene (32, 33) aufgenommen ist.

6. Justierungseinheit nach einem der Ansprüche 1 bis 5,
**dadurch gekennzeichnet, dass**
das Distanzelement (20) mit einem Innengewinde ausgebildet ist.

7. Verstellungseinrichtung (50), umfassend eine Justierungseinheit (10), einen Lagerbolzen (24), eine auf den Lagerbolzen (24) aufschraubbare Mutter (58), sowie zwei gegeneinander gelagerte Bauteile (34, 40), wobei eines der gegeneinander gelagerten Bauteile (34, 40) eine Lageraufnahme (36) und das andere eine Lagerhalterung (52) aufweist, wobei die Lageraufnahme (36) von der am jeweils anderen Bauteil (40) angeordneten Lagerhalterung (52) umgriffen ist,
**dadurch gekennzeichnet, dass**
die Justierungseinheit (10) nach einem der Ansprüche 1 bis 6 ausgebildet ist, wobei das Gummi-Metall-Lager (11) in der Lageraufnahme (36) aufgenommen ist, und das Gummi-Metall-Lager (11), das Distanzelement (20) sowie die Lagerhalterung (52) von dem Lagerbolzen (24) durchsetzt sind, der mittels der aufschraubbaren Mutter (58) an der Lagerhalterung (52) festlegbar ist.

8. Verstellungseinrichtung nach Anspruch 7,
**dadurch gekennzeichnet, dass**
der Lagerbolzen (24) über das Distanzelement (20) mit dem Innenkern (12) in Wirkverbindung steht, um den Innenkern (12) über einen Verstellweg quer zur Anbindungsachse (A) auszulenken.

9. Verstellungseinrichtung nach Anspruch 8,
**dadurch gekennzeichnet, dass**
der Verstellweg in Abhängigkeit einer axialen Wegstrecke des Distanzelements (20) verstellbar ist.

10. Verstellungseinrichtung nach Anspruch 8,
**dadurch gekennzeichnet, dass**
der Verstellweg in Abhängigkeit einer Anzahl von Umdrehungen des Lagerbolzens (24) verstellbar ist.

## Claims

1. Adjustment unit (10) comprising a rubber/metal bearing (11) having a bearing axis (L), wherein the rubber/metal bearing (11) has an inner core (12) which extends along the bearing axis (L), wherein the inner core (12) is constructed with a passage (18) which extends in the longitudinal direction of the inner core (12), **characterized in that**
in the passage (18) there is arranged a spacer element (20) which has an aperture (22) for receiving a bearing pin (24), wherein the aperture (22) extends along a longitudinal axis which defines a connection axis (A) of the rubber/metal bearing (11), and wherein the connection axis (A) and the bearing axis (L) can be adjusted relative to each other by means of an adjustment of the spacer element (20), wherein the spacer element (20) is movably arranged in the extent direction of the passage (18), wherein in the installed state of the rubber/metal bearing (11) an axial adjustment of the spacer element (20) along the connection axis (A) is carried out and brings about a translational deflection of the inner core (12) transversely relative to the connection axis (A).

2. Adjustment unit according to claim 1,
**characterized in that**
the spacer element (20) is arranged in a torsion-resistant manner in the inner core (12).

3. Adjustment unit according to either claim 1 or claim 2,
**characterized in that**
the passage (18) of the inner core (12) has a longitudinal axis which extends at an angle with respect to the bearing axis (L).

4. Adjustment unit according to either claim 1 or claim 2,
**characterized in that**
the spacer element (20) can be displaced along at least one guide rail (32, 33) which is arranged on the inner core (12), wherein the guide rail (32, 33) extends at an angle with respect to the bearing axis (L) in the longitudinal direction of the passage (18).

5. Adjustment unit according to claim 4,
**characterized in that**
the spacer element (20) has at least one guiding element (30) which is received in the guide rail (32, 33).

6. Adjustment unit according to any one of claims 1 to 5,
**characterized in that**
the spacer element (20) is constructed with an inner thread.

7. Adjustment device (50) comprising an adjustment unit (10), a bearing pin (24), a nut (58) which can be screwed onto the bearing pin (24), and two components (34, 40) which are supported against each other, wherein one of the components (34, 40) which are supported against each other has a bearing receiving member (36) and the other has a bearing holder (52), wherein the bearing receiving member (36) is surrounded by the bearing holder (52) which is arranged on the other component (40) in each case,
**characterized in that**
the adjustment unit (10) is constructed according to any one of claims 1 to 6, wherein the rubber/metal bearing (11) is received in the bearing receiving member (36) and the rubber/metal bearing (11), the spacer element (20) and the bearing holder (52) are passed through by the bearing pin (24) which can be secured to the bearing holder (52) by means of the nut (58) which can be screwed on.

8. Adjustment device according to claim 7,
**characterized in that**
the bearing pin (24) is actively connected to the inner core (12) by means of the spacer element (20) in order to deflect the inner core (12) over an adjustment path transversely with respect to the connection axis (A).

9. Adjustment device according to claim 8,
**characterized in that**
the adjustment path can be adjusted in accordance with an axial distance of the spacer element (20).

10. Adjustment device according to claim 8,
**characterized in that**
the adjustment path can be adjusted in accordance with a number of revolutions of the bearing pin (24).

## Revendications

1. Unité d'ajustage (10) comprenant un palier en métal et caoutchouc (11) avec un axe de palier (L), dans laquelle le palier en métal et caoutchouc (11) présente un noyau intérieur (12) qui s'étend le long de l'axe de palier (L), dans laquelle le noyau intérieur (12) est configuré avec une traversée (18) s'étendant dans le sens longitudinal du noyau intérieur (12), **caractérisée en ce que**
un élément d'écartement (20) est agencé dans la traversée (18), élément qui présente une ouverture (22) pour le logement d'un tourillon (24), dans laquelle l'ouverture (22) s'étend le long d'un axe longitudinal qui définit un axe de raccordement (A) du palier en métal et caoutchouc (11), et dans laquelle l'axe de raccordement (A) et l'axe de palier (L) sont réglables l'un par rapport à l'autre par le biais d'un réglage de l'élément d'écartement (20), dans laquelle l'élément d'écartement (20) est agencé de manière mobile dans le sens d'étendue de la traversée (18), dans laquelle dans l'état monté du palier en métal et caoutchouc (11), un réglage axial de l'élément d'écartement (20) est effectué le long de l'axe de raccordement (A) et provoque une orientation translatoire du noyau intérieur (12) transversalement à l'axe de raccordement (A).

2. Unité d'ajustage selon la revendication 1,
**caractérisée en ce que**
l'élément d'écartement (20) est agencé solidairement en rotation dans le noyau intérieur (12).

3. Unité d'ajustage selon l'une quelconque des revendications 1 ou 2,
**caractérisée en ce que**
la traversée (18) du noyau intérieur (12) présente un axe longitudinal qui s'étend selon un angle par rapport à l'axe de palier (L).

4. Unité d'ajustage selon l'une quelconque des revendications 1 ou 2,
**caractérisée en ce que**
l'élément d'écartement (20) est mobile le long d'au moins un rail de guidage (32, 33) agencé au niveau du noyau intérieur (12), dans laquelle le rail de guidage (32, 33) s'étend selon un angle par rapport à l'axe de palier (L) dans le sens longitudinal de la traversée (18).

5. Unité d'ajustage selon la revendication 4,
**caractérisée en ce que**
l'élément d'écartement (20) présente au moins un élément de guidage (30) qui est logé dans le rail de guidage (32, 33).

6. Unité d'ajustage selon l'une quelconque des revendications 1 à 5,
**caractérisée en ce que**
l'élément d'écartement (20) est configuré avec un filetage intérieur.

7. Dispositif de réglage (50), comprenant une unité d'ajustage (10), un tourillon (24), un écrou (58) vissable sur le tourillon (24), ainsi que deux composants (34, 40) logés l'un contre l'autre, dans lequel l'un des composants (34, 40) logés l'un contre l'autre présente un logement de palier (36) et l'autre un support de palier (52), dans lequel le logement de palier (36) est entouré par le support de palier (52) agencé au niveau de l'autre composant respectif (40),
**caractérisé en ce que**
l'unité d'ajustage (10) est configurée selon l'une quelconque des revendications 1 à 6, dans lequel le palier en métal et caoutchouc (11) est logé dans le logement de palier (36), et le palier en métal et caoutchouc (11), l'élément d'écartement (20) ainsi que le support de palier (52) sont traversés par le tourillon (24) qui peut être fixé au support de palier (52) au moyen de l'écrou (58) vissable.

8. Dispositif de réglage selon la revendication 7,
**caractérisé en ce que**
le tourillon (24) est en liaison active avec le noyau intérieur (12) par le biais de l'élément d'écartement (20) afin d'orienter le noyau intérieur (12) transversalement à l'axe de raccordement (A) par le biais d'une course de réglage.

9. Dispositif de réglage selon la revendication 8,
**caractérisé en ce que**
la course de réglage est réglable en fonction d'un parcours axial de l'élément d'écartement (20).

10. Dispositif de réglage selon la revendication 8,
**caractérisé en ce que**
la course de réglage est réglable en fonction d'un nombre de rotations du tourillon (24).
